# EUROPÄISCHE PATENTANMELDUNG

(11) **EP 4 170 211 A1**
(43) Veröffentlichungstag der Anmeldung: **26.04.2023**
(21) Anmeldenummer: 22197492.6
(22) Anmeldetag: 23.09.2022
(51) Int. Cl.: F16K 31/524, F16K 31/122, F16K 11/16, F16K 11/20, B60G 17/052, B60G 17/056

(54) **VENTILEINHEIT, BETÄTIGUNGSEINHEIT, VENTILEINRICHTUNG, GERÄTEPLATTFORM, SOWIE FAHRZEUG**

(30) Priorität: 20.10.2021 DE 102021127182
(71) Anmelder: ZF CV Systems Europe BV, 1170 Brüssel (BE)
(72) Erfinder: DIET, Felix, 31552 Rodenberg (DE); GERLACH, Steffen, 30169 Hannover (DE); STENDER, Axel, 31787 Hameln (DE); WITTE, Norbert, 31867 Lauenau (DE)
(74) Vertreter: Ohlendorf, Henrike

(57) **Zusammenfassung**

Die Erfindung betrifft eine Ventileinheit (10) mit einem ersten Ventil für einen Belüftungsvorgang, einem zweiten Ventil für einen Entlüftungsvorgang und einer ersten Schnittstelle zur Verbindung der Ventileinheit (10) mit einer Betätigungseinheit (20). Die Erfindung betrifft weiterhin eine Betätigungseinheit (20) mit einem manuell betätigbaren Bedienelement zur Betätigung des ersten Ventils und des zweiten Ventils, sowie mit einer zweiten Schnittstelle zur Verbindung der Betätigungseinheit (20) mit einer Ventileinheit (10). Die Erfindung betrifft auch eine Ventileinrichtung mit einer solchen Ventileinheit (10) und einer solchen Betätigungseinheit (20), die über die erste Schnittstelle und die zweite Schnittstelle verbindbar sind, und eine Geräteplattform für eine solche Ventileinrichtung. Schließlich betrifft die Erfindung ein Fahrzeug mit einer solchen Ventileinheit (10), Betätigungseinheit (20), Ventileinrichtung und/oder Geräteplattform.

## Beschreibung

Die Erfindung betrifft eine Ventileinheit, eine Betätigungseinheit, eine Ventileinrichtung, sowie eine Geräteplattform für eine derartige Ventileinrichtung und ein Fahrzeug mit einer Luftfederungseinrichtung, die eine derartige Ventileinrichtung aufweist. Die Ventileinrichtung ist beispielsweise als ein Niveauregulierungsventil für eine Luftfederungseinrichtung eines Lastkraftfahrzeugs ausgestaltet.

Luftfederungseinrichtungen für Lastkraftfahrzeuge sind seit vielen Jahren bekannt und werden insbesondere im oberen Tonnagesegment für den Gütertransport verwendet. Vorteile sind insbesondere eine optimale Federung unabhängig vom Straßen- und Beladungszustand, die zur Erhöhung des Fahrkomforts und Schonung des Ladeguts führt.

Moderne, elektronisch geregelte Luftfederungseinrichtungen oder manuell eingestellte Luftfederungseinrichtungen dieser Art verwenden ein Niveauregulierungsventil für eine Steuerung von Luftfederbälgen, das üblicherweise die folgenden Stellungen aufweist: Heben, Senken und Stoppstellung, sowie eine Fahrtstellung.

Niveauregulierungsventile verrasten üblicherweise in der Stopp-Stellung. Zusätzlich gibt es Niveauregulierungsventile, die in der Senken-Stellung verrasten, oder in der Senken- und Heben-Stellung verrasten. Zudem müssen die Niveauregulierungsventile je nach Kundenbedarf entweder mit einem manuell betätigbaren Hebel oder mit zwei Tastern ausgestattet sein.

Es muss daher eine Vielzahl von Niveauregulierungsventilen entwickelt werden, um allen Kundenanforderungen gerecht zu werden. Bei üblichen Niveauregulierungsventilen, die manuell über einen Hebel bedienbar sind, wird bei einer Drehung des Hebels über eine mit dem Hebel verbundene Welle direkt die Ventillogik betätigt. Aufgrund dieses Aufbaus ist ein einfaches Adaptieren des Niveauregulierungsventils für eine Betätigung mittels zwei Tastern nicht ohne weiteres möglich.

Es besteht somit ein Bedarf für eine Ventileinrichtung, die verschiedenste Kundenwünsche befriedigt und kostengünstig aufgebaut ist.

Aufgabe der Erfindung ist es daher, eine derartige Ventileinrichtung, eine entsprechende Geräteplattform, sowie ein Fahrzeug mit einer derartigen Ventileinrichtung anzugeben.

Diese Aufgabe wird durch eine Ventileinheit, eine Betätigungseinheit, eine Ventileinrichtung, eine Geräteplattform und ein Fahrzeug gemäß den unabhängigen Ansprüchen gelöst.

Die abhängigen Ansprüche beinhalten vorteilhafte Weiterbildungen und Verbesserungen der Erfindung entsprechend der nachfolgenden Beschreibung dieser Maßnahmen.

Die Erfindung betrifft eine Ventileinheit mit einem ersten Ventil für einen Belüftungsvorgang und einem zweiten Ventil für einen Entlüftungsvorgang. Dementsprechend kann die Ventileinheit einen Drucklufteinlass, einen Druckluftluftauslass und einen Entlüftungsauslass aufweisen. Die Ventileinheit umfasst weiterhin ein erstes Ventil und ein zweites Ventil. Die Ventileinheit kann dabei einen Kolben und eine Rückstellfeder für das erste Ventil und einen Kolben und eine Rückstellfeder für das zweite Ventil aufweisen. Die Ventileinheit umfasst außerdem eine erste Schnittstelle. Die erste Schnittstelle kann mit einem Gewinde ausgebildet sein.

Bei der Ventileinheit kann es sich um eine Ventileinheit einer Luftfederung eines Fahrzeugs, insbesondere eines Nutzfahrzeugs, handeln. Insbesondere kann es sich um eine Ventileinheit einer elektronisch gesteuerten Luftfederung (electronically controlled air suspension; ECAS) oder um eine Ventileinheit einer Anhänger-Luftfederungssteuerung (trailer air suspension control; TASC) handeln.

Die Erfindung betrifft weiterhin eine Betätigungseinheit mit einem manuell betätigbaren Bedienelement. Die Bedienheit umfasst weiterhin eine zweite Schnittstelle, über die die Betätigungseinheit mit einer Ventileinheit, insbesondere einer Ventileinheit wie vorstehend und nachstehend beschrieben, verbindbar ist, indem die zweite Schnittstelle mit einer Schnittstelle der Ventileinheit, insbesondere der ersten Schnittstelle wie vorstehend und nachstehend beschrieben, verbindbar ist. Die zweite Schnittstelle kann mit einem Gewinde ausgebildet sein, insbesondere mit einem Gewinde, das zu dem Gewinde der ersten Schnittstelle komplementär ist. Die Betätigungseinheit kann dabei ein erstes Kontaktelement und ein zweites Kontaktelement aufweisen. Das erste Kontaktelement kann zur Betätigung eines ersten Kolbens, insbesondere des ersten Kolbens einer Ventileinheit wie vorstehend und nachstehend beschrieben, und das zweite Kontaktelement kann zur Betätigung eines zweiten Kolbens, insbesondere des zweiten Kolbens einer Ventileinheit wie vorstehend und nachstehend beschrieben, ausgebildet sein.

Die Erfindung betrifft weiterhin eine Ventileinrichtung mit einer Ventileinheit wie vorstehend und nachstehend beschrieben und einer Betätigungseinheit wie vorstehend und nachstehend beschrieben, wobei die Ventileinheit und die Betätigungseinheit über die erste Schnittstelle und die zweite Schnittstelle verbindbar sind.

Damit ist die Ventileinrichtung modular ausgebildet. In dieser Weise kann beispielsweise eine Reihe von verschieden ausgebildeten Ventileinheiten und eine Reihe von verschieden ausgebildeten Betätigungseinheiten bereitgehalten werden und je nach Einsatzzweck eine geeignete Ventileinheit und eine geeignete Betätigungseinheit ausgewählt und in einer Ventileinrichtung zusammengefügt werden. Es muss nicht für jeden denkbaren Einsatzzweck eine passende Ventileinrichtung hergestellt und vorgehalten werden, sondern in einer Art Baukastensystem kann jeweils eine gewünschte Ventileinheit und Betätigungseinheit ausgewählt und über die erste und die zweite Schnittstelle zusammengefügt werden. Dies ermöglicht eine größere Flexibilität für verschiedenen Einsatzzwecke, aber auch einen geringeren Produktions- und Lageraufwand. Gegenüber einer nicht-modularen Lösung kann bei weit geringerem Produktionsaufwand eine sehr große Bandbreite möglicher Konfigurationen der Ventileinrichtung bereitgestellt werden. Bei Bedarf kann sogar eine im Einsatz befindliche Ventileinrichtung nachträglich umgerüstet werden, wenn sie beispielsweise eine Betätigungseinheit mit einem Hebel zur manuellen Bedienung aufwies und sich im Gebrauch herausgestellt hat, dass eine manuelle Bedienung über Taster bevorzugt würde.

In einer Ausführungsform ist das erste Ventil ein 4/2-oder ein 5/2-Ventil und das zweite Ventil ein 4/2-oder ein 3/2-Ventil.

In einer Ausführungsform weist die Betätigungseinheit zur Betätigung der Ventile eine elektropneumatische Ansteuerung auf und das manuell betätigbare Bedienelement weist eine mechanische Ansteuerung auf. Die elektropneumatische Ansteuerung weist hierbei insbesondere ein Magnetventil zur Steuerung einer Druckluftzufuhr für die Ventile auf.

In einer weiteren Ausführungsform weist die Betätigungseinheit eine Verrastung für das erste Ventil oder eine Verrastung für das zweite Ventil oder eine Verrastung für jedes der Ventile oder keine Verrastung auf.

In einer weiteren Ausführungsform umfasst die Betätigungseinheit einen Taster oder einen Hebel zur Bedienung der Ventile. Typischerweise werden weist die Betätigungseinheit, wenn sie einen Hebel aufweist, nur einen Hebel auf, mit dem die Ventileinrichtung in alle Stellungen bedienbar ist. Typischerweise weist die Betätigungseinheit, wenn sie einen Taster aufweist, zwei Taster auf, wobei ein Taster die Funktion "Heben" und ein Taster die Funktion "Senken" ansteuert.

In einer weiteren Ausführungsform weist die Betätigungseinheit ein Kontaktelement für jedes der Ventile auf. Die Kontaktelemente werden durch den oder die Taster betätigt oder werden durch den Hebel betätigt. Jedes Kontaktelement kann dabei beispielsweise als Teil eines zugeordneten Kolbens oder Tasters ausgebildet sein, insbesondere einstückig mit diesem. Zur Betätigung durch den Hebel kann die Betätigungseinheit weiterhin eine Welle, eine Kurvenscheibe und eine Drehfeder aufweisen, sodass die Betätigung der Kontaktelemente jeweils über die Welle, die Kurvenscheibe und die Drehfeder erfolgt.

In einer weiteren Ausführungsform weisen die Ventileinheit und die Betätigungseinheit gleich oder übereinstimmend ausgebildete Schnittstellen auf, beispielsweise weist sowohl die erste als auch die zweite Schnittstelle ein Gewinde auf. Die Betätigungseinheit kann mittels einer Verschraubung mit der Ventileinheit verbindbar sein. Die erste Schnittstelle und die zweite Schnittstelle können aber auch beispielsweise in der Form eines Bajonettverschlusses oder eines Rastverschlusses mit beispielsweise einer oder mehrerer Rastnasen an der ersten oder der zweiten Schnittstelle und korrespondierenden Rastausnehmungen an der zweiten oder der ersten Schnittstelle oder komplementären Rastkrägen an der ersten oder der zweiten Schnittstelle gebildet sein.

Die Geräteplattform weist für eine wie vorstehend beschrieben ausgebildete Ventileinrichtung eine Ventileinheit und eine Betätigungseinheit auf, die wie vorstehend beschrieben ausgebildet sind.

In einer Ausführungsform enthält die Geräteplattform und/oder die Ventileinrichtung ein externes pneumatisches Bediengerät. Das externe pneumatische Bediengerät kann einen Hebel ohne eine Verrastung oder zwei Taster ohne eine Verrastung aufweisen.

Die Ventileinheit, die Betätigungseinheit, die Ventileinrichtung und/oder die Geräteplattform wie vorstehend beschrieben sind vorteilhafterweise für ein Fahrzeug, insbesondere ein Lastkraftfahrzeug, sowie für Anhängerfahrzeuge mit einer Luftfederungseinrichtung verwendbar.

Ausführungsbeispiele der Erfindung sind in den Zeichnungen schematisch dargestellt und werden nachfolgend anhand der Figuren näher erläutert.

Es zeigen:
- Fig. 1: eine Geräteplattform mit Komponenten für eine Ventileinrichtung nach der Erfindung;
- Fig. 2: Ausführungsbeispiele einer Ventileinrichtung für eine manuell eingestellte Luftfederung;
- Fig. 3: Ausführungsbeispiele einer Ventileinrichtung für eine elektronisch geregelte Luftfederung;
- Fig. 4: ein Ausführungsbeispiel einer Ventileinrichtung mit einem Hebel in einem Querschnitt; und
- Fig. 5: ein Ausführungsbeispiel einer Ventileinrichtung mit zwei Tastern in einem Querschnitt.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

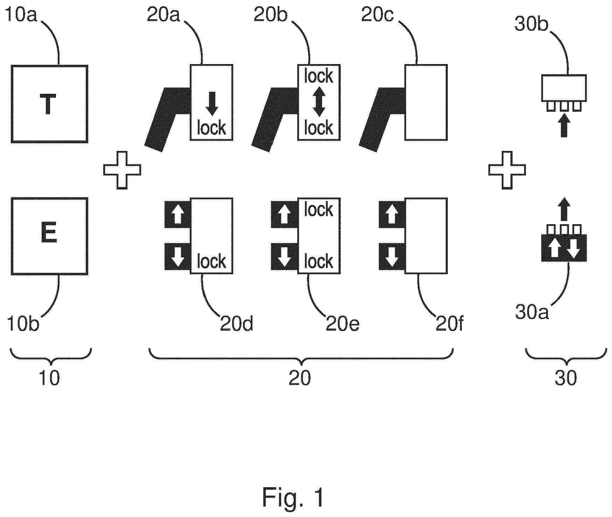

Die Ventileinrichtung wird in einem bevorzugten Ausführungsbeispiel aus zwei Komponenten zusammengesetzt, einer Ventileinheit 10 und einer Betätigungseinheit 20, wie in der Fig. 1 dargestellt. Bei Bedarf kann die Ventileinrichtung zudem mit einem externen pneumatischen Bediengerät 30 ausgestattet sein. Die Ventileinrichtung umfasst insbesondere ein erstes Ventil für einen Belüftungsvorgang und ein zweites Ventil für einen Entlüftungsvorgang und weist einen Drucklufteinlass, einen Druckluftluftauslass und einen Entlüftungsauslass auf. Ohne Beschränkung der Allgemeinheit weist nach dem Ausführungsbeispiel die Ventileinheit 10 einen Kolben und eine Rückstellfeder für das erste Ventil und einen Kolben und eine Rückstellfeder für das zweite Ventil auf.

Der Kolben für das erste Ventil ist in einer ersten Ausführungsform Teil eines 5/2-Ventils für eine Verwendung für eine Ventileinrichtung für eine manuell eingestellte Luftfederung, Ventileinheit 10a, und in einer weiteren Ausführungsform Teil eines 4/2-Ventils für eine Verwendung für eine elektronisch geregelte Luftfederung, Ventileinheit 10b. Der Kolben für das zweite Ventil kann in beiden Ausführungsformen sowohl Teil eines 4/2-Ventils als auch Teil eines 3/2-Ventils sein.

Die Betätigungseinheit 20 weist ein manuell betätigbares Bedienelement auf, insbesondere einen Hebel, Ausführungsformen 20a, 20b, 20c, oder zwei Taster, Ausführungsformen 20d, 20e, 20f. Hierbei gibt es sowohl für die Ausführungsformen der Betätigungseinheit 20 mit einem Hebel, 20a, 20b, 20c, als auch für die Ausführungsformen der Betätigungseinheit 20 mit zwei Tastern, 20d, 20e, 20f, jeweils eine Ausführungsform ohne Verrastung, 20c, 20f, eine mit einer Verrastung in der Senken-Stellung, 20a, 20d, und eine Verrastung in der Heben-Stellung und der Senken-Stellung, 20b, 20e.

Für das externe pneumatische Bediengerät 30 ist eine eine Ausführungsform 30a mit zwei Tastern dargestellt. Weiterhin ist beispielsweise eine Ausführungsform mit einem Hebel möglich; diese ist in der Fig. 1 nicht dargestellt. Das pneumatische Bediengerät 30 bedient hierbei über eine an der Ventileinheit angeordnete Kontrolleinheit 30b, die beispielsweise ein oder zwei Magnetventile aufweist, die Ventile der Ventileinrichtung. Für die Ausführungsformen des pneumatischen Bediengeräts 30 wird keine Verrastung benötigt.

Die Ausführungsformen der Ventileinheit, 10a, 10b, als auch die Ausführungsformen der Betätigungseinheit, 20a-20f, weisen gemeinsame Schnittstellen 104a, 104b auf, so dass jede der Ventileinheiten 10a, 10b mit jeder der Betätigungseinheiten 20a-20f kombinierbar ist. Die zwei Ausführungsformen der Ventileinheit 10, die sechs Ausführungsformen der Betätigungseinheit 20 und die zwei Ausführungsformen des Bediengeräts 30 können hierdurch beliebig miteinander zu einer Ventileinrichtung kombiniert werden, wie beispielsweise von einem Kunden gewünscht.

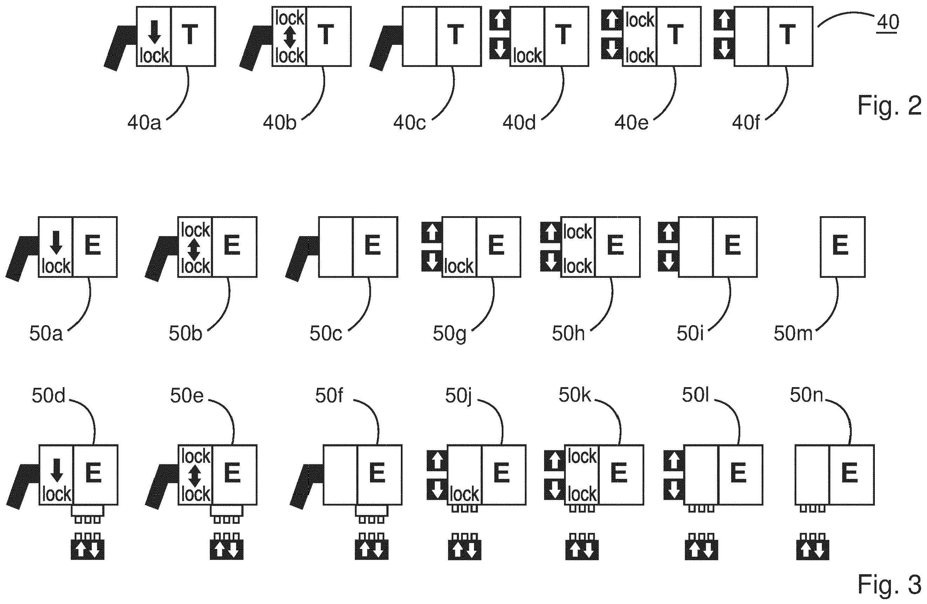

Für eine Ventileinrichtung 40 für eine konventionelle Luftfederung, die nur mit der Hand betätigt wird und keine elektronische Regelung aufweist, gibt es hierbei sechs bevorzugte Ausführungsformen, wie in der Fig. 2 dargestellt: eine Ventileinrichtung 40a mit einem Hebel und mit einer Verrastung in der Senken-Stellung, eine Ventileinrichtung 40b mit einem Hebel und mit einer Verrastung in der Heben-Stellung und in der Senken-Stellung, eine Ventileinrichtung 40c mit einem Hebel und ohne Verrastung, sowie eine Ventileinrichtung 40d mit zwei Tastern und mit einer Verrastung in der Senken-Stellung, eine Ventileinrichtung 40e mit zwei Tastern und mit einer Verrastung in der Heben-Stellung und der Senken-Stellung, und eine Ventileinrichtung 40f mit zwei Tastern und ohne Verrastung. Für die Ventileinrichtung für eine konventionelle Luftfederung wird üblicherweise kein externes pneumatisches Bediengerät benötigt.

Für eine Ventileinrichtung 50 für eine elektronisch geregelte Luftfederung gibt es eine Vielzahl an Ausführungsformen, wie in der Fig. 3 dargestellt. Es gibt vorzugsweise sechs Ausführungsformen mit einem Hebel, 50a-f, sechs Ausführungsformen mit zwei Tastern, 50g-I, sowie eine Ausführungsform 50m ohne einen Hebel, ohne Taster und ohne ein externes pneumatisches Bediengerät und eine Ausführungsform 50n ohne einen Hebel und ohne Taster, aber mit einem externen pneumatischen Bediengerät.

Die Ventileinrichtung 50a weist einen Hebel mit einer Verrastung in der Senken-Stellung, die Ventileinrichtung 50b weist einen Hebel mit einer Verrastung in der Senken-Stellung und der Heben-Stellung, und die Ventileinrichtung 50c weist einen Hebel ohne Verrastung auf, wobei jede der Ausführungsformen 50a-c ohne ein externes pneumatisches Bediengerät ausgestattet ist. Die Ventileinrichtungen 50d-f entsprechen denen der Ventileinrichtungen 50a-c, sind jedoch mit einem externen pneumatischen Bediengerät ausgestattet.

Die Ventileinrichtung 50g weist zwei Taster mit einer Verrastung in der Senken-Stellung, die Ventileinrichtung 50h weist zwei Taster mit einer Verrastung in der Senken-Stellung und der Heben-Stellung, und die Ventileinrichtung 50i weist zwei Taster ohne Verrastung auf, wobei jede der Ausführungsformen 50g-i ohne ein externes pneumatisches Bediengerät ausgestattet ist. Die Ventileinrichtungen 50j-I entsprechen denen der Ventileinrichtungen 50g-i, diese sind jedoch mit einem externen pneumatischen Bediengerät ausgestattet.

Die Ventileinrichtung 50m ist ohne eine Betätigungseinheit 20 und ohne ein externes pneumatisches Bediengerät 30 ausgestattet, und ist daher nur elektronisch regelbar. Die Ventileinrichtung 50n weist keine Betätigungseinheit 20 auf, ist aber mit einem externen pneumatischen Bediengerät 30 ausgestattet.

Die in Fig. 2 und Fig. 3 erläuterten Ausführungsbeispiele geben nur einen Teil der möglichen Kombinationen an, weitere Ausführungsformen sind möglich. Die Ausführungsformen der Ventileinheit 10, der Betätigungseinheit 20 und des externen pneumatischen Bediengeräts 30 bilden daher eine Geräteplattform für eine Vielzahl von Ventileinrichtungen 40 für eine konventionelle Luftfederung und Ventileinrichtungen 50 für eine elektronisch geregelte Luftfederung.

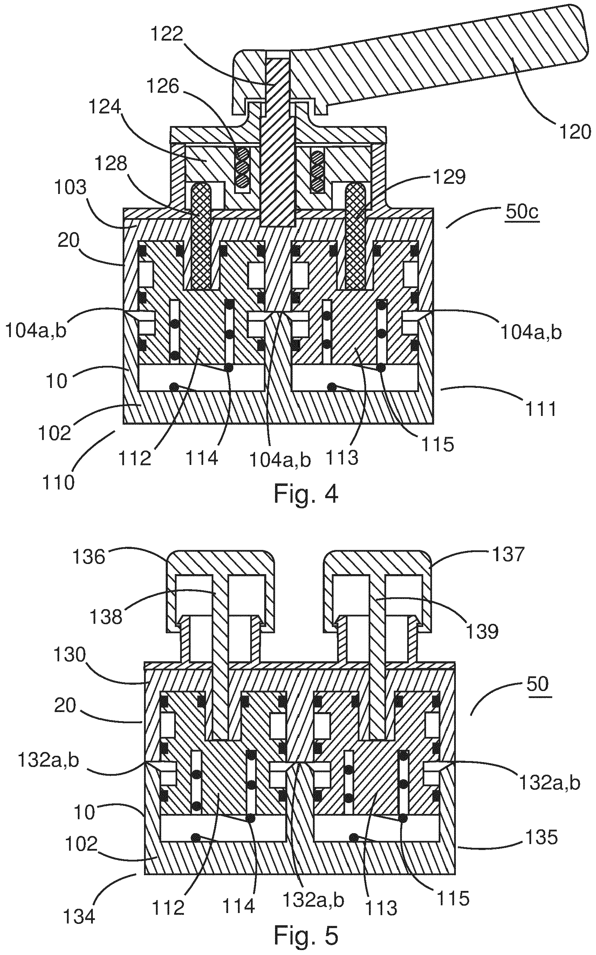

Eine beispielhafte Ausführungsform für eine der vorangehend beschriebenen Ventileinrichtungen, Ventileinrichtung 50c, ist in der Fig. 4 in einem Querschnitt dargestellt. Die Ventileinrichtung 50c weist eine Ventileinheit 10 mit einem ersten Gehäuseteil 102 und eine Betätigungseinheit 20 mit einem zweiten Gehäuseteil 103 auf, wobei die Gehäuseteile 102, 103 über kompatible, hier identisch ausgebildete Schnittstellen 104a, 104b fest miteinander verbunden sind, beispielsweise durch Verschraubungen. Die Ventileinheit 10 weist einen ersten Kolben 112 und eine erste Rückstellfeder 114 für ein erstes Ventil 110 auf, sowie einen zweiten Kolben 113 und eine zweite Rückstellfeder 115 für ein zweites Ventil 111. Das erste Ventil 110 ist beispielsweise ein Belüftungsventil und das zweite Ventil 111 ein Entlüftungsventil für eine Luftfederungsanlage eines Kraftfahrzeugs.

Für eine manuelle Betätigung der Ventileinrichtung 50c weist die Betätigungseinheit 20 in diesem Ausführungsbeispiel einen Hebel 120, eine Welle 122, eine Kurvenscheibe 124, eine Drehfeder 126 und zwei Kontaktelemente 128, 129 auf. Die Kurvenscheibe 124 ist über die Welle 122 mit dem Hebel 120 verbunden. Die beiden Kontaktelemente 128, 129 sind in dem Gehäuseteil 103 der Betätigungseinheit 20 zur Betätigung der Kolben 112, 113 angeordnet, derart, dass bei einer Drehung des Hebels 120 eines der Kontaktelemente 128 oder 129 durch eine Kurvenbahn der Kurvenscheibe 124 verschoben wird. Bei einer Drehung des Hebels 120 im Uhrzeigersinn wird beispielsweise durch die Kurvenscheibe 124 das Kontaktelement 128 und hierdurch der Kolben 112 verschoben und bei einer Drehung gegen den Uhrzeigersinn das Kontaktelement 129 und hierdurch der Kolben 113 verschoben. Hierdurch wird bei einer Betätigung des Hebels 120 eine Transformation von einer rotatorischen in eine translatorische Bewegung durchgeführt.

Die Drehfeder 126 bewirkt eine Kraft in Richtung einer Grundstellung des Hebels 120, in der auf keines der Kontaktelemente 128, 129 eine Kraft wirkt. Ist der Hebel 120 in der Grundstellung, so wird ein eingestellter Druck gehalten. In dem Ausführungsbeispiel der Fig. 4 sind die Kolben 112, 113 sowie die Kontaktelemente 128, 129 axial zur Welle 122 angeordnet.

Eine beispielhafte Ausführungsform für die Ventileinrichtung 50i ist in der Fig. 5 in einem Querschnitt dargestellt. Die Ventileinrichtung 50i weist eine Ventileinheit 10 mit einem ersten Gehäuseteil 102 und eine Betätigungseinheit 20 mit einem zweiten Gehäuseteil 130 auf, wobei die Gehäuseteile 102, 130 über identische Schnittstellen 132a, 132b fest miteinander verbunden sind und zwei Ventile 134, 135 bilden. Die Ventileinheit 10 mit den Kolben 112, 113 und den Rückstellfedern 114, 115 ist identisch mit der Ventileinheit 10 der Fig. 4.

Für eine manuelle Betätigung der Ventileinrichtung 50i weist die Betätigungseinheit 20 in diesem Ausführungsbeispiel zwei Taster 136, 137 zur Betätigung der Ventile 134, 135 auf. Der Taster 136 besitzt eine Achse 138 zur Betätigung des Kolbens 112 und der Taster 137 eine Achse 139 zur Betätigung des Kolbens 113. Die Achsen 138, 139 sind hierbei als Kontaktelemente geformt zur Betätigung der Kolben 112, 113 und entsprechen den Kontaktelementen 128, 129 der Fig. 4.

Die Ventileinheiten 10 und die Betätigungseinheiten 20, sowie die zwei Ausführungsformen des externen pneumatischen Bediengeräts bilden daher ein System für eine Geräteplattform für eine Vielzahl von Ventileinrichtungen.

Alle hierin erwähnten Beispiele wie auch bedingte Formulierungen sind ohne Einschränkung auf solche speziell angeführten Ausführungsbeispiele zu verstehen. Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste (Bestandteil der Beschreibung)

- 10: Ventileinheit
- 10a: Ventileinheit für eine manuell eingestellte Luftfederung
- 10b: Ventileinheit für eine elektronisch geregelte Luftfederung
- 20: Betätigungseinheit
- 20a-c: Betätigungseinheiten mit einem Hebel
- 20d-f: Betätigungseinheiten mit zwei Tastern
- 30: Externes pneumatisches Bediengerät
- 40: Ventileinrichtung für eine manuell eingestellte Luftfederung
- 40a-c: Ventileinrichtungen mit einem Hebel für eine manuell eingestellte Luftfederung
- 40d-f: Ventileinrichtungen mit zwei Tastern für eine manuell eingestellte Luftfederung
- 50: Ventileinrichtung für eine elektronisch geregelte Luftfederung
- 50a-f: Ventileinrichtungen für eine elektronisch geregelte Luftfederung mit einem Hebel
- 50g-I: Ventileinrichtungen für eine elektronisch geregelte Luftfederung mit zwei Tastern
- 50m: Ventileinrichtung für eine elektronisch geregelte Luftfederung ohne Hebel, ohne Taster und ohne externes pneumatisches Bediengerät
- 50n: Ventileinrichtung für eine elektronisch geregelte Luftfederung ohne Hebel, ohne Taster und mit externem pneumatischen Bediengerät
- 102, 103: Gehäuseteile
- 104a, 104b: Schnittstellen
- 110, 111: Ventile
- 112, 113: Kolben
- 114, 115: Rückstellfedern
- 120: Hebel
- 122: Welle
- 124: Kurvenscheibe
- 126: Drehfeder
- 128, 129: Kontaktelement
- 130: Gehäuseteil
- 132a, 132b: Schnittstellen
- 134, 135: Ventile
- 136, 137: Taster
- 138, 139: Achsen

## Patentansprüche

1. Ventileinheit (10) mit einem ersten Ventil (110, 134) für einen Belüftungsvorgang und mit einem zweiten Ventil (111, 135) für einen Entlüftungsvorgang, **gekennzeichnet durch** eine erste Schnittstelle (104a, 132a) zur Verbindung der Ventileinheit (10) mit einer Betätigungseinheit (20).

2. Ventileinheit (10) nach Anspruch 1, wobei das erste Ventil (110, 134) ein 4/2-Ventil oder ein 5/2-Ventil (110, 134) ist und das zweite Ventil (111, 135) ein 4/2-Ventil oder ein 3/2-Ventil (111, 135) ist.

3. Betätigungseinheit (20) mit einem manuell betätigbaren Bedienelement (120, 136, 137) zur Betätigung eines ersten Ventils (110, 134) und eines zweiten Ventils (111, 135) **gekennzeichnet durch** eine zweite Schnittstelle (104b, 132b) zur Verbindung der Betätigungseinheit (20) mit einer Ventileinheit (10), insbesondere einer Ventileinheit nach einem der Ansprüche 1 und 2.

4. Betätigungseinheit (20) nach Anspruch 3, wobei die Betätigungseinheit (20) zur Betätigung des ersten Ventils (110, 134) und des zweiten Ventils (111, 135) eine elektropneumatische Ansteuerung und das manuell betätigbare Bedienelement (120, 136, 137) eine mechanische Ansteuerung aufweist.

5. Betätigungseinheit (20) nach Anspruch 4, wobei die elektropneumatische Ansteuerung ein Magnetventil zur Steuerung einer Druckluftzufuhr für die Ventile aufweist.

6. Betätigungseinheit (20) nach einem der Ansprüche 3 bis 5, wobei die Betätigungseinheit (20) eine Verrastung für das erste Ventil (110, 134) oder eine Verrastung für das zweite Ventil (111, 135) oder eine Verrastung für jedes der Ventile (110, 111, 134, 135) oder keine Verrastung aufweist.

7. Betätigungseinheit (20) nach einem der Ansprüche 3 bis 6, wobei die Betätigungseinheit (20) einen Taster (136, 137) oder einen Hebel (120) zur Bedienung der Ventile (110, 111, 134, 135) umfasst.

8. Betätigungseinheit (20) nach Anspruch 7, wobei die Betätigungseinheit (20) ein Kontaktelement (128, 129) für jedes der Ventile (110, 111, 134, 135) umfasst, wobei jedes Kontaktelement (128, 129) oder mindestens eines der Kontaktelemente (128, 129) durch den Taster (136, 137) betätigt wird, oder die Betätigungseinheit weiterhin eine Welle (122), eine Kurvenscheibe (124) und eine Drehfeder (126) umfasst und jedes Kontaktelement (128, 129) über die Welle (122), die Kurvenscheibe (124) und die Drehfeder (126) durch den Hebel (120) betätigt wird.

9. Ventileinrichtung (40, 50) mit einer Ventileinheit (10) nach einem der Ansprüche 1 bis 2 und einer Betätigungseinheit (20) nach einem der Ansprüche 3 bis 8, wobei die Ventileinheit (10) und die Betätigungseinheit (20) über die erste Schnittstelle (104a, 132a) und die zweite Schnittstelle (104b, 132b) verbindbar sind.

10. Ventileinrichtung (40, 50) nach Anspruch 9, wobei die Ventileinheit (10) und die Betätigungseinheit (20) gleich ausgebildete Schnittstellen (104a, 104b, 132a, 132b) aufweisen

11. Ventileinrichtung (40, 50) nach Anspruch 10, wobei die Betätigungseinheit (20) mittels einer zwischen der ersten Schnittstelle (104a, 132a) und der zweiten Schnittstelle (104b, 132b) ausgebildeten Verschraubung mit der Ventileinheit (10) verbunden ist.

12. Geräteplattform für eine Ventileinrichtung (40, 50), wobei die Geräteplattform eine Ventileinheit (10) nach einem der Ansprüche 1 bis 2 und eine Betätigungseinheit (20) nach einem der Ansprüche 3 bis 8 aufweist.

13. Geräteplattform für eine Ventileinrichtung (40, 50), wobei die Geräteplattform eine Ventileinrichtung (40, 50) nach einem der Ansprüche 9 bis 11 aufweist.

14. Ventileinrichtung (40, 50) nach einem der Ansprüche 9 bis 11 oder Geräteplattform nach einem der Ansprüche 12 und 13, wobei die Ventileinrichtung (40, 50) oder die Geräteplattform ein externes pneumatisches Bediengerät (30) aufweist.

15. Ventileinrichtung (40, 50) nach einem der Ansprüche 9 bis 11 und 14 oder Geräteplattform nach einem der Ansprüche 12 bis 14, wobei das externe pneumatische Bediengerät (30) einen Hebel ohne eine Verrastung oder zwei Taster ohne eine Verrastung aufweist.

16. Fahrzeug, insbesondere Lastkraftfahrzeug oder Anhängerfahrzeug, das eine Ventileinheit (10) nach einem der Ansprüche 1 und 2, eine Betätigungseinheit (20) nach einem der Ansprüche 3 bis 8, eine Ventileinrichtung (40, 50) nach einem der Ansprüche 9 bis 11, 14 und 15 und/oder eine Geräteplattform nach einem der Ansprüche 12 bis 15 aufweist.
